Europäisches Patentamt

(19) European Patent Office

Office européen des brevets

(11) Numéro de publication : **0 443 898 A1**

(12) # DEMANDE DE BREVET EUROPEEN

(21) Numéro de dépôt : **91400283.7**

(22) Date de dépôt : **06.02.91**

(51) Int. Cl.⁵ : **B60P 1/02, B62D 1/22**

(30) Priorité : **19.02.90 FR 9001956**

(43) Date de publication de la demande :
**28.08.91 Bulletin 91/35**

(84) Etats contractants désignés :
**AT BE CH DE DK ES GB GR IT LI LU NL SE**

(71) Demandeur : **SOVAM INDUSTRIES**
**Route de Moncoutant**
**Parthenay ( Deux Sèvres ) (FR)**

(72) Inventeur : **Palaquer, François**
**15 boulevard du 8 Mai**
**Loudon (Vienne) (FR)**
Inventeur : **Rateau, André**
**82 Route de Thouars**
**Parthenay (Deux Sèvres) (FR)**

(74) Mandataire : **Cabinet Pierre HERRBURGER**
**115, Boulevard Haussmann**
**F-75008 Paris (FR)**

(54) **Véhicule à cabine élévatrice.**

(57) Véhicule comportant un châssis (1) pourvu de roues (2, 3) dont au moins deux roues directrices, une cabine (6) montée sur le châssis par l'intermédiaire de dispositifs élévateurs (8), cette cabine comportant un poste de pilotage (7) pourvu de moyens de commande de direction du véhicule (9), des moyens de transmission souple reliant les moyens de commande de direction (9) du poste de pilotage aux roues directrices (2) pour assurer la direction du véhicule en position haute et en position basse de la cabine, véhicule caractérisé en ce que les moyens de commande de direction de la cabine comprennent une partie d'un mécanisme d'accouplement mécanique disposé sur la cabine de manière telle qu'il s'accouple à la partie complémentaire de ce mécanisme prévu sur le châssis (1) lorsque la cabine (6) se place en position basse sur son châssis.

EP 0 443 898 A1

FIG.1

## VEHICULE A CABINE ELEVATRICE

L'invention concerne un véhicule à cabine élévatrice.

On connaît déjà des véhicules à cabine élévatrice destinés, par exemple sur les aéroports, à transporter les marchandises ou les voyageurs entre un poste d'embarquement ou de chargement et un avion.

Ce véhicule comprend un châssis pourvu de roues directrices qui supporte une cabine élévatrice par l'intermédiaire d'un dispositif élévateur.

Le châssis comporte le boîtier de direction, le moteur d'entraînement du véhicule ainsi que tous les autres organes moteurs nécessaires à son fonctionnement, alors que la totalité des organes de commande sont prévus dans le poste de pilotage de la cabine. Les liaisons entre les organes de commande du poste de pilotage et les organes de direction et les organes moteurs du châssis sont assurées par des liaisons souples comprenant des tuyauteries hydrauliques et/ou pneumatiques et des câbles électriques.

Les inconvénients de la transmission souple, en général hydraulique, de commande de direction résident dans son manque de précision. Cet inconvénient est peu sensible lorsque la cabine est en position haute car, dans ce cas, soit le véhicule est immobile, soit il se déplace à une vitesse très lente pour s'adapter, par exemple, contre la porte d'un avion. Par contre, cela est un inconvénient majeur lorsque la cabine est en position basse en appui sur le châssis puisque, dans ce cas, en raison du manque de préci-sion de la transmission de la commande de direction, la vitesse de déplacement du véhicule ne peut être que lente.

La présente invention a notamment pour but de remédier à ces inconvénients et concerne à cet effet un véhicule à cabine élévatrice comportant un châs-sis pourvu de roues dont au moins deux roues directrices, une cabine montée sur le châssis par l'intermédiaire de dispositifs élévateurs, cette cabine comportant un poste de pilotage pourvu de moyens de commande de direction du véhicule, des moyens de transmission souple reliant les moyens de commande de direction du poste de pilotage aux roues directrices pour assurer la direction du véhicule en position haute et en position basse de la cabine, véhicule caractérisé en ce que les moyens de commande de direction de la cabine comprennent une partie d'un mécanisme d'accouplement mécanique disposé sur la cabine de manière telle qu'il s'accouple à la partie complémentaire de ce mécanisme prévu sur le châssis lorsque la cabine se place en position basse sur son châssis.

Suivant une autre caractéristique de l'invention, le mécanisme d'accouplement mécanique comprend une portion d'axe cannelée se logeant dans un manchon pourvu de cannelures complémentaires, ce manchon et cet axe étant reliés, l'un au volant de direction du véhicule, l'autre au boîtier de direction du châssis.

Suivant une autre caractéristique de l'invention, la transmission souple de la commande de direction est pourvue d'un mécanisme de débrayage interrompant la liaison du mécanisme de commande de direction de la cabine avec le boîtier de direction du châssis lorsque la cabine se place en position basse.

L'invention est représentée à titre d'exemple non limitatif sur les dessins ci-joints dans lesquels :
– la figure 1 est une vue latérale schématique d'un mode de réalisation d'un véhicule conforme à l'invention,
– la figure 2 est une vue partielle de détail du véhi-cule de la figure 1.

La présente invention a en conséquence pour but la réalisation d'un véhicule à cabine élévatrice dont la vitesse de déplacement n'est pas limitée lorsque cette cabine est en position basse sur son châssis, sans pour cela compliquer les moyens de commande de transmission de la commande de direction du véhicule.

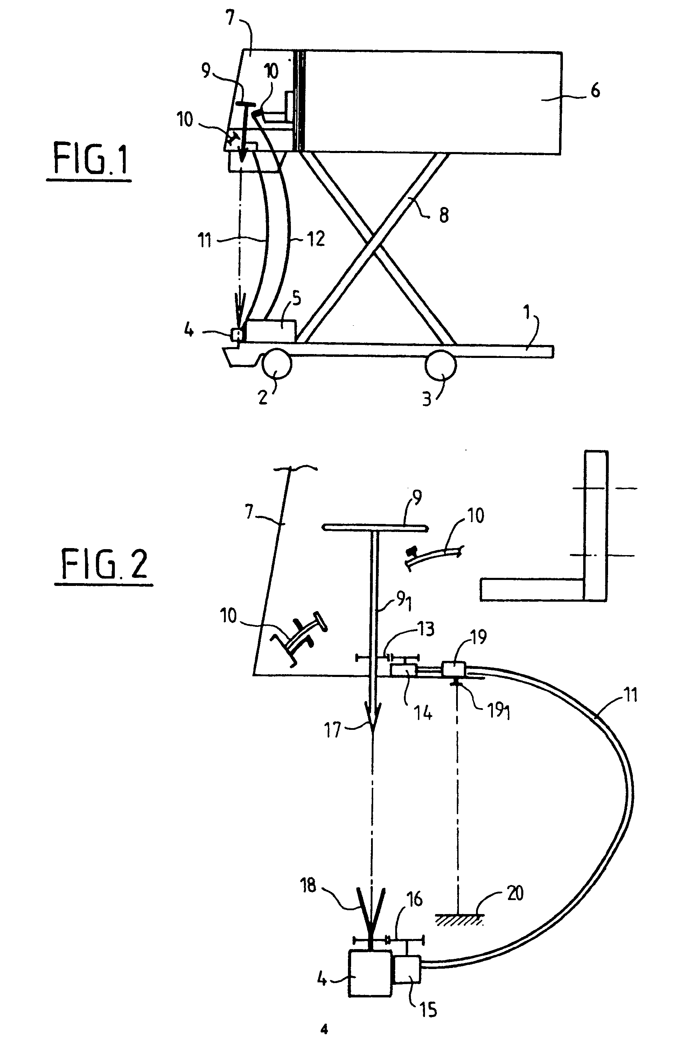

Sur la figure 1, on a représenté un mode de réalisation d'un véhicule conforme à l'invention, qui comprend un châssis 1 pourvu de roues avant 2 directrices et de roues arrière 3 motrices. Les roues directrices 2 sont actionnées à partir d'un moteur hydraulique 15 par l'intermédiaire d'une transmission mécanique comprenant un boîtier de direction 4. Les roues motrices 3 sont entraînées à partir d'un moteur électrique ou d'un moteur à explosion 5 également prévu sur le châssis 1.

La cabine 6 du véhicule est pourvue d'un poste de pilotage 7 et est supportée par le châssis 1 par l'intermédiaire d'un mécanisme élévateur 8, par exemple à bras articulés. L'actionnement de ce mécanisme élévateur est obtenu par l'intermédiaire d'un moteur, de préférence hydraulique, non représenté et prévu également sur le châssis 1.

La commande de tous ces moteurs est obtenue à partir du poste de pilotage 7 de la cabine 6, qui comporte donc un volant 9 pour la commande de la direction d'un véhicule, des manettes de commande de l'élévateur ainsi que les diverses manettes et pédales que l'on trouve sur tout véhicule automobile et qui sont destinées à assurer son déplacement et, notamment, les commandes de mise en route du moteur, de changement de vitesse automatique, de frein, d'accélération, de débrayage, etc.

La liaison de ces divers moyens de commande du poste de pilotage 7, aux organes moteurs prévus sur le châssis 1, est constitué par un ensemble de liaisons souples comprenant des tuyauteries souples de transmission d'un fluide hydraulique ou pneumatique 11, ainsi que des conducteurs électriques 12 de façon que la commande de ces moteurs puisse être assurée de la même manière, que la cabine 6 soit en position haute, comme cela est représenté sur la figure 1, ou en position basse en appui sur le châssis 1.

Suivant l'exemple plus particulièrement représenté sur la figure 2, le véhicule comporte sur la colonne de direction $9_1$ reliée au volant 9 une transmission à pignons 13 qui commande un moteur hydraulique 14. Ce moteur alimente le moteur hydraulique 15 du châssis 1 par les tuyauteries souples 11 pour actionner le boîtier de direction 4 par la transmission à pignons 16.

Conformément à l'invention, la colonne de direction $9_1$ est reliée à la partie 17 de moyens d'accouplement mécanique alors que la partie complémentaire 18 est reliée au boîtier de direction 4 du châssis 1. Ces parties 17 et 18 sont disposées de manière qu'elles s'accouplent automatiquement l'une dans l'autre lorsque la cabine 6 arrive en position basse. Ce moyen d'accouplement mécanique pourra, par exemple, être constitué pour la partie 17 par une portion d'axe cannelé prévu à l'extrémité de la colonne de direction $9_1$ alors que la partie 18 sera constituée par un manchon cannelé de manière complémentaire solidaire de l'arbre d'entrée de boîtier de direction 4.

Ces parties 17 et 18 pourront être pourvues de zones d'entrée coniques comme cela est représenté sur la figure 2, afin d'assurer leur guidage lors de leur accouplement.

De préférence également, la transmission souple 11 de commande de direction sera pourvue d'un mécanisme commutateur 19 prévu pour interrompre la commande du boîtier de direction 4 par l'intermédiaire de cette liaison souple 11 lorsque la cabine 6 est en position basse et afin que la direction du véhicule soit, dans cette position, uniquement assurée par l'intermédiaire de la transmission mécanique accouplée 17, 18.

Ce dispositif de commutation 19 prévu sur la cabine est disposé de manière telle que son organe de commande $19_1$ soit actionné par une butée 20 du châssis 1 lorsque la cabine arrive en position basse et que l'accouplement des parties 17 et 18 est réalisé.

Le débrayage de cette transmission souple de la commande de direction a pour avantage d'éviter les défauts de synchronisation entre cette transmission hydraulique souple et la transmission mécanique lorsque les parties 17 et 18 sont accouplées.

**Revendications**

**1)** Véhicule à cabine élévatrice comportant un châssis (1) pourvu de roues (2, 3) dont au moins deux roues directrices, une cabine (6) montée sur le châssis par l'intermédiaire de dispositifs élévateurs (8), cette cabine comportant un poste de pilotage (7) pourvu de moyens de commande de direction du véhicule (9), des moyens de transmission souple reliant les moyens de commande de direction (9) du poste de pilotage aux roues directrices (2) pour assurer la direction du véhicule en position haute et en position basse de la cabine, véhicule caractérisé en ce que les moyens de commande de direction de la cabine comprennent une partie (17) d'un mécanisme d'accouplement mécanique disposé sur la cabine de manière telle qu'il s'accouple à la partie complémentaire (18) de ce mécanisme prévu sur le châssis (1) lorsque la cabine (6) se place en position basse sur son châssis.

**2)** Véhicule conforme à la revendication 1, caractérisé en ce que le mécanisme d'accouplement mécanique comprend une portion d'axe cannelée (17) se logeant dans un manchon (18) pourvu de cannelures complémentaires, ce manchon et cet axe étant reliés, l'un au volant de direction (9) du véhicule, l'autre au boîtier de direction (4) du châssis.

**3)** Véhicule conforme à l'une quelconque des revendications précédentes, caractérisé en ce que la transmission souple (11) de la commande de direction est pourvue d'un mécanisme de débrayage (19) interrompant la liaison du mécanisme de commande de direction (9) de la cabine avec le boîtier de direction (4) du châssis lorsque la cabine se place en position basse.

## FIG.1

## FIG.2

Office européen
des brevets

# RAPPORT DE RECHERCHE EUROPEENNE

Numero de la demande

EP 91 40 0283

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-3537745 (HERRING) <br> * colonne 5, lignes 35 - 49; figure 3 * <br> --- | 1 | B60P1/02 <br> B62D1/22 |
| Y | FR-A-2171815 (SVENSKA KULLAGERFABRIKEN) <br> * figures 1-6 * <br> --- | 1 | |
| X | DE-A-2547997 (ALLIS-CHALMERS) <br> * page 2, lignes 22 - 29 * <br> * page 5, ligne 34 - page 6, ligne 18; figures 3-5 * <br> ----- | 1, 2 | |

| | DOMAINES TECHNIQUES RECHERCHES (Int. Cl.5) |
|---|---|
| | B60P <br> B62D |

**Le présent rapport a été établi pour toutes les revendications**

| Lieu de la recherche | Date d'achèvement de la recherche | Examinateur |
|---|---|---|
| BERLIN | 29 AVRIL 1991 | LUDWIG H.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

....................................................................

& : membre de la même famille, document correspondant

EPO FORM 1503 03.82 (P0402)